(19) Europäisches Patentamt
European Patent Office
Office européen des brevets

(11) **EP 4 383 626 A1**

(12) **EUROPEAN PATENT APPLICATION**
published in accordance with Art. 153(4) EPC

(43) Date of publication:
**12.06.2024 Bulletin 2024/24**

(21) Application number: **22852193.6**

(22) Date of filing: **02.08.2022**

(51) International Patent Classification (IPC):
**H04L 5/00** (2006.01)     **H04B 7/06** (2006.01)
**H04W 16/28** (2009.01)

(52) Cooperative Patent Classification (CPC):
**H04B 7/06; H04L 5/00; H04W 16/28**

(86) International application number:
**PCT/CN2022/109740**

(87) International publication number:
**WO 2023/011481 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.08.2021 CN 202110882533**

(71) Applicant: **Vivo Mobile Communication Co., Ltd.
Dongguan, Guangdong 523863 (CN)**

(72) Inventors:
• **YANG, Yu
Dongguan, Guangdong 523863 (CN)**
• **SUN, Peng
Dongguan, Guangdong 523863 (CN)**

(74) Representative: **Murgitroyd & Company
165-169 Scotland Street
Glasgow G5 8PL (GB)**

(54) **METHOD AND APPARATUS FOR DETERMINING BEAM INFORMATION, AND COMMUNICATION DEVICE AND STORAGE MEDIUM**

(57)     This application discloses a method and an apparatus for determining beam information, a communication device, and a storage medium. The method includes: in a case that a first time period overlaps a second time period, determining target beam information, where the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information; and transmitting a target channel or a target reference signal based on the target beam information, where the target channel is the first channel and/or the second channel, and the target reference signal is the first reference signal and/or the second reference signal.

In a case that a first time period overlaps a second time period, a target device determines target beam information — 201

The target device transmits a target channel or a target reference signal based on the target beam information — 202

FIG. 2

EP 4 383 626 A1

**Description**

**CROSS-REFERENCE TO RELATED APPLICATION**

This application claims priority to Chinese Patent Application No. 202110882533.7, filed in China on August 2, 2021, which is incorporated herein by reference in its entirety.

**TECHNICAL FIELD**

This application pertains to the field of communications technologies, and specifically relates to a method and an apparatus for determining beam information, a communication device, and a storage medium.

**BACKGROUND**

After beam measurement and beam reporting, a network side may provide a beam indication for a downlink/uplink channel or reference signal, where the beam indication is used to establish a beam link between the network side and user equipment (User Equipment, UE) to implement channel or reference signal transmission. In a unified (unified) transmission configuration indication (Transmission Configuration Indication, TCI) mechanism of an NR system, a network side may indicate that a plurality of channels use a same beam, which may be referred to as a common beam (common beam), and the network side may use a beam indicated by a media access control control element (Media Access Control-Control Element, MAC CE) or downlink control information (Downlink Control Information, DCI) to transmit the plurality of channels.

However, when a time overlap occurs before different beams (such as different common beams or beams for specific channels) take effect, how to determine a beam required for transmitting a channel or a reference signal within an overlapping time is a problem that needs to be resolved urgently.

**SUMMARY**

Embodiments of this application provide a method and an apparatus for determining beam information, a communication device, and a storage medium, to resolve a problem of how to determine a beam required for transmitting a channel or a reference signal within an overlapping time.

According to a first aspect, a method for determining beam information is provided. The method includes: in a case that a first time period overlaps a second time period, determining target beam information, where the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information; and transmitting a target channel or a target reference signal based on the target beam information, where the target channel is the first channel and/or the second channel, and the target reference signal is the first reference signal and/or the second reference signal.

According to a second aspect, an apparatus for determining beam information is provided. The apparatus for determining beam information includes a determining module and a transmission module. The determining module is configured to determine target beam information in a case that a first time period overlaps a second time period, where the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information. The transmission module is configured to transmit a target channel or a target reference signal based on the target beam information determined by the determining module, where the target channel is the first channel and/or the second channel, and the target reference signal is the first reference signal and/or the second reference signal.

According to a third aspect, a communication device is provided. The communication device includes a processor, a memory, and a program or instructions stored in the memory and exectuable on the processor. When the program or instructions are executed by the processor, steps of the method according to the first aspect are implemented.

According to a fourth aspect, a communication device is provided and includes a processor and a communication interface. The processor is configured to determine target beam information in a case that a first time period overlaps a second time period, where the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information. The communication interface is configured to transmit a target channel or a target reference signal based on the target beam information, where the target channel is the first channel and/or the second channel, and the target reference signal is the first reference signal and/or the second reference signal.

According to a fifth aspect, a readable storage medium is provided. The readable storage medium stores a program or instructions. When the program or instructions are executed by a processor, steps of the method according to the first aspect are implemented.

According to a sixth aspect, a chip is provided. The chip includes a processor and a communication interface. The communication interface is coupled to the processor. The processor is configured to run a program or instructions to implement the method according to the first aspect.

According to a seventh aspect, a computer program or program product is provided. The computer program or program product is stored in a non-volatile storage medium. The program or program product is executed by at least one processor to implement steps of the method for determining beam information according to the first aspect.

In the embodiments of this application, when the first time period overlaps the second time period, a target device can determine the beam information in the overlapping time period, and transmit the channel or the reference signal based on the beam information, where the first time period is the time period before the application time of the first beam information, and the second time period is the time period before the application time of the second beam information. In this solution, when the time overlap occurs before the first beam information and the second beam information take effect, that is, when the time overlap occurs before different beam information indicated by a network-side device takes effect, the target device can determine the beam information in the overlapping time period, to transmit the channel or the reference signal in the overlapping time period by using the beam information, and ensure that UE and the network-side device can accurately transmit the channel or the reference signal.

## BRIEF DESCRIPTION OF DRAWINGS

FIG. 1 is a schematic diagram of an architecture of a communications system according to an embodiment of this application;

FIG. 2 is a schematic diagram of a method for determining beam information according to an embodiment of this application;

FIG. 3 is a schematic diagram of a structure of an apparatus for determining beam information according to an embodiment of this application;

FIG. 4 is a schematic diagram of a hardware structure of a communication device according to an embodiment of this application;

FIG. 5 is a schematic diagram of a hardware structure of UE according to an embodiment of this application; and

FIG. 6 is a schematic diagram of a hardware structure of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communications system.

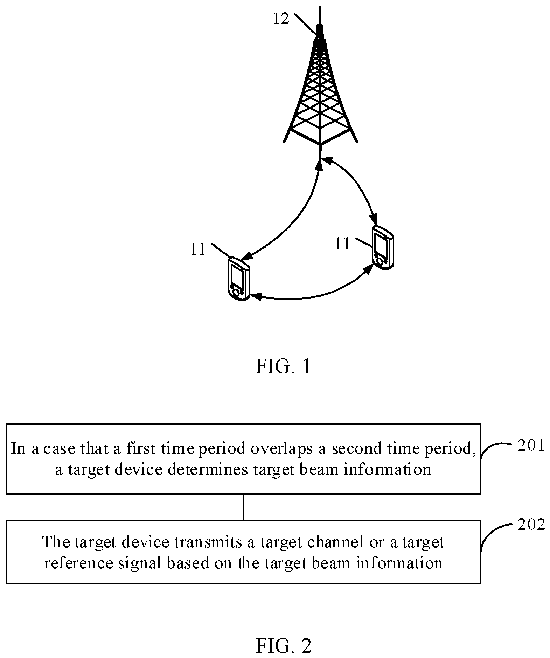

FIG. 1 is a schematic diagram of an architecture of a wireless communications system to which an embodiment of this application may be applied. The wireless communications system includes UE 11 and a network-side device 12. The UE 11 may also be referred to as a terminal device or a terminal. The UE 11 may be a terminal-side device such as a mobile phone, a tablet computer (tablet computer), a laptop computer (laptop computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (MOBILE INTERNET DEVICE, MID), a wearable device (wearable device), a vehicular user equipment (VUE), or a pedestrian user equipment (PUE). The wearable device includes a smart watch, a smart band, an earphone, glasses, or the like. It should be noted that a specific type of the UE 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmission Reception Point, TRP), or another appropriate term in the art, as long as the same technical effect is achieved. The base station is not limited to specific technical terms. It should be noted that in the embodiments of this application, only a base station in an NR system is used as an example, but a specific type of the base station is not limited.

The following describes some concepts and/or terms related to a method and an apparatus for determining beam information, a communication device, and a storage medium provided in the embodiments of this application.

1. Beam measurement and beam reporting (beam measurement and beam reporting)

Analog beamforming features full-band transmission, and array elements in each polarization direction on a panel of each high-frequency antenna array can transmit only analog beams in a time division multiplexing mode. A beamforming weight for each analog beam is implemented by adjusting parameters of radio frequency front-end devices such as a phase shifter.

Usually, a polling mode is used to train an analog beamforming vector. To be specific, array elements in each polarization direction on each antenna panel take turns to transmit training signals (that is, candidate beamforming vectors) at prescribed times in the time division multiplexing mode. A terminal feeds back beam reports after performing measurement, so that a network side uses the training signals to implement emission of analog beams for next service transmission. Content of beam reports usually includes identifiers of several optimal transmit beams and measured received power of each transmit beam.

When performing beam measurement, the network configures a reference signal resource set (RS resource set). The reference signal resource set includes at least one reference signal resource, for example, a synchronization signal and PBCH block (Synchronization Signal Block, SSB) resource or a channel state information reference signal (Channel State Information-Reference Signal, CSI-RS) resource. The UE measures layer 1 (L1)-reference signal received power (Reference Signal Received Power, RSRP) or an L1-signal to interference plus noise ratio (Signal to Interference plus Noise Ratio, SINR) of each RS resource, and reports at least one optimal measurement result to the network, where report content includes an SSB resource indicator (SSB Resource Indicator, SSBRI) or a CSI-RS resource indicator (CSI-RS Resource Indicator, CRI) and the corresponding L1-RSRP/L1-SINR. The report content reflects at least one optimal beam and quality of the beam, so that the network determines beam information used for channel or signal transmission with the UE.

2. Beam indication (beam indication) mechanism

After beam measurement and beam reporting, the network may provide a beam indication for a downlink/uplink channel or reference signal, where the beam indication is used to establish a beam link between the network and the UE to implement channel or reference signal transmission. Currently, there are the following beam indication solutions for each channel or reference signal:

For a beam indication of a physical downlink control channel (Physical Downlink Control Channel, PDCCH), the network configures K TCI states (state) for each control resource set (Control Resource Set, CORESET) through radio resource control (Radio Resource Control, RRC) signaling. When K > 1, a TCI state is indicated or activated by a MAC CE. When K=1, no additional MAC CE command is required. When monitoring the PDCCH, the UE uses same quasi-co-location (Quasi-co-location, QCL), that is, a same TCI state, for all search spaces (search space) in the CORESET, to monitor the PDCCH. A reference signal (Reference Signal, RS) (such as a periodic CSI-RS resource, a semi-persistent CSI-RS resource, or an SSB) in the TCI state is spatial QCL with a UE-specific (specific) PDCCH demodulation reference signal (Demodulation Reference Signal, DMRS) port. The UE may learn, based on the TCI state, which receive beam is used to receive the PDCCH.

For a beam indication of a physical downlink shared channel (Physical Downlink Shared Channel, PDSCH), the network configures M TCI states through RRC signaling, then activates 2N TCI states through a MAC CE command, and then notifies a TCI state through an N-bit TCI field of DCI, where an RS in the TCI state is QCL with a DMRS port of a PDSCH to be scheduled. The UE may learn, based on the TCI state, which receive beam is used to receive the PDSCH. When a time interval between the DCI and the PDSCH is less than a preset threshold (a higher layer parameter time duration for QCL (time Duration For QCL) configured by the network based on a UE capability), default beam (default beam) information needs to be used to transmit the PDSCH. For example, the default beam information is determined by using QCL information of a CORESET with a smallest CORESET identifier (ID) among CORESETs monitored by the UE in a latest slot (slot) on an active (active) bandwidth part (Bandwidth Part, BWP) of a serving cell (serving cell). In a case of cross-carrier scheduling, the default beam information is determined by using an active TCI state with a smallest identifier among active TCI states applied to the PDSCH on an activate BWP of a cell in which the PDSCH is located.

For a beam indication of a CSI-RS, when a CSI-RS type is a periodic CSI-RS, the network configures QCL information for a CSI-RS resource through RRC signaling. When the CSI-RS type is a semi-persistent CSI-RS, and the network uses a MAC CE command to activate a CSI-RS resource from a CSI-RS resource set configured by RRC, the network indicates QCL information of the CSI-RS resource. When the CSI-RS type is an aperiodic CSI-RS, the network configures QCL for a CSI-RS resource through RRC signaling, and uses DCI to trigger the CSI-RS.

For a beam indication of a physical uplink control channel (Physical Uplink Control Channel, PUCCH), the network configures spatial relation information for each PUCCH resource through RRC signaling with a parameter PUCCH-spatial relation information (Spatial Relation Information). When a plurality of pieces of spatial relation information are configured for the PUCCH resource, one piece of spatial relation information is indicated or activated through a MAC CE. When only one piece of spatial relation information is configured for the PUCCH resource, no additional MAC CE command is required.

For a beam indication of a physical uplink shared channel (Physical uplink shared channel, PUSCH), spatial relation information of the PUSCH is indicated as follows: When the PUSCH is scheduled by DCI carried by the PDCCH, each SRI code point of a sounding reference signal resource indicator (Sounding Reference Signal resource indicator, SRI) field in the DCI indicates one SRI, and the SRI is used to indicate the spatial relation information of the PUSCH.

For a beam indication of an SRS, when an SRS type is a periodic SRS, the network configures spatial relation information for an SRS resource through RRC signaling. When the SRS type is a semi-persistent SRS or an aperiodic SRS, the network configures spatial relation information for an SRS resource through RRC signaling, and may further update the spatial relation information of the SRS resource through a MAC CE command.

3. Beam application time (Beam Application Time, BAT) in a beam switching process

When the network uses a MAC CE to activate a TCI state, a delay of TCI state switching is defined (the TCI state is used to indicate beam information), which distinguishes between a known (known) TCI state and an unknown (unknown) TCI state.

If the target TCI state is known and the UE receives the MAC CE in slot n, the delay of TCI state switching is:

$$slot\ n + T_{HARQ} + 3\,\mathrm{N}_{slot}^{subframe,\mu} + TO_{uk} * \left( T_{first-SSB} + T_{SSB-proc} \right) \Big/ NR\ slot\ length.$$

If the target TCI state is unknown and the UE receives the MAC CE in slot n, the delay of TCI state switching is:

$$slot\ n + T_{HARQ} + 3\,\mathrm{N}_{slot}^{subframe,\mu} + T_{L1-RSRP} + TO_{uk} * \left( T_{first-SSB} + T_{SSB-proc} \right) \Big/ NR\ slot\ length.$$

$T_{HARQ}$ is duration between downlink data transmission and acknowledgement (Acknowledgement, ACK) information, $T_{first-SSB}$ is a transmission time of a first SSB after the UE decodes the MAC CE, and $T_{SSB-proc}$ = 2 ms. If the TCI state is not in an active TCI state list, an additional processing time (additional processing time) is further required. For the unknown TCI state, the additional processing time is a time required for L1-RSRP measurement and reporting.

The network configures a threshold parameter time duration for QCL based on the UE capability. When the DCI schedules the PDSCH in slot n, if an offset (offset) between the DCI and the PDSCH is less than a threshold value, a default beam (default beam) is used to transmit the PDSCH. If the offset between the DCI and the PDSCH is greater than or equal to the threshold value, the TCI state indicated by the DCI is used to determine beam information of the PDSCH.

The beam application time may also generally refer to a time when beam information indicated by a beam indication command takes effect. Starting from this time point, the effective beam information is used for transmission of a preset channel or reference signal (such as the PDSCH, or various channels and reference signals used by common beams).

4. TCI framework (TCI framework)

Currently, a new TCI framework is introduced and referred to as a unified TCI framework. The mechanism uses a same beam for a plurality of channels, and this beam may be referred to as a common beam (common beam). A beam indicated by the network through a MAC CE or DCI may be used to transmit a plurality of channels.

5. CORESET

A maximum bandwidth of each carrier is 400 MHz. However, considering the UE capability, a maximum bandwidth supported by the UE may be less than 400 MHz, and the UE may work on a plurality of small BWPs. Each bandwidth part corresponds to one numerology (Numerology), bandwidth (bandwidth), and frequency location (frequency location). For a frequency division duplex (Frequency Division Duplex, FDD) system or a paired spectrum (paired spectrum), a base station configures a maximum of four downlink BWPs and a maximum of four uplink BWPs for the UE. For a TDD system or an unpaired spectrum (unpaired spectrum), the base station configures a maximum of four DL/UL BWP pairs for the UE. A DL BWP and a UL BWP in each DL/UL BWP pair have a same center carrier frequency. In addition, each UE has a default (default) DL BWP or a default DL/UL BWP pair. The default DL BWP or the default DL/UL BWP pair is usually a BWP with a relatively small bandwidth. When the UE does not receive data or detect a PDCCH for a long time, the UE is switched from a current active BWP to the default DL BWP or the default DL/UL BWP pair by using a timer, to achieve a power saving effect. Active-BWP switching is implemented through RRC, DCI, or a timer. For example, DCI in a first CORESET instructs the UE to switch to a second CORESET. After the UE is switched to the second CORESET, the CORESET is an active BWP. There are a maximum of three CORESETs on each BWP of each cell.

A CORESET whose identifier is 0 (CORESET #0) is configured by a physical broadcast channel (Physical Broadcast Channel, PBCH), and is used by the UE to receive system information (system information). For a broadcast PDCCH, the UE determines to receive a common search space corresponding to a specific SSB. A unicast PDSCH may be scheduled by DCI associated with the CORESET #0.

For example, a method for determining search space #0 (that is, a TypeO-PDCCH common search space) based on an SSB is as follows: If the UE determines that a TypeO-PDCCH common search space exists in a CORESET, the UE determines, based on four most significant bits of a PDCCH-Config SIB1, a quantity of continuous resource blocks (Resource Block, RB) and a quantity of continuous symbols of the CORESET in which the TypeO-PDCCH common search space exists, and determines a monitoring occasion (monitoring occasion) based on four least significant bits of the PDCCH-Config SIB1.

In a protocol, an offset is defined based on a subcarrier spacing (subcarrier spacing) of a CORESET, that is, from a smallest RB index of the CORESET including the TypeO-PDCCH common search space to a smallest RB index of a common RB that overlaps a first RB of an SSB.

For multiplexing mode 1 of the SSB and the CORESET, the UE monitors the PDCCH in the TypeO-PDCCH common search space in two adjacent slots, where a start slot is n0. The UE determines parameters such as an index of slot n0 based on an SSB index. For multiplexing modes 2 and 3 of the SSB and the CORESET, the UE monitors the PDCCH in the TypeO-PDCCH common search space in a slot, where a period of the TypeO-PDCCH common search space is equal to a period of the SSB. The UE determines parameters such as an index of the slot based on the SSB index.

A method for determining beam information according to the embodiments of this application is hereinafter described in detail by using specific embodiments and application scenarios thereof with reference to the accompanying drawings.

An embodiment of this application provides a method for determining beam information. FIG. 2 is a flowchart of a method for determining beam information according to an embodiment of this application. As shown in FIG. 2, the method for determining beam information according to this embodiment of this application may include the following step 201 and step 202.

Step 201: In a case that a first time period overlaps a second time period, a target device determines target beam information.

In this embodiment of this application, the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information.

In this embodiment of this application, the target device is UE or a network-side device.

It should be noted that the overlap between the first time period and the second time period may be understood as "the first time period completely overlaps the second time period, or the first time period partially overlaps the second time period."

Optionally, in this embodiment of this application, the first time period is a time period from a time T1 to a time T2, and the second time period is a time period from a time T3 to a time T4. In one case, the time T1 is equal to the time T3, and the time T2 is equal to the time T4, that is, the first time period completely overlaps the second time period. In another case, the time T1 is earlier than the time T3 (and the time T2 is earlier or later than the time T4), or the time T3 is earlier than the time T1 (and the time T4 is earlier or later than the time T2), that is, the first time period partially overlaps the second time period.

It should be noted that the application time of the first beam information may be understood as an effective time of the first beam information, that is, after the first beam information takes effect, the target device uses the first beam information to transmit the first channel or the first reference signal; and the application time of the second beam information may be understood as an effective time of the second beam information, that is, after the second beam information takes effect, the target device uses the second beam information to transmit the second channel or the second reference signal.

The first time period being the time period before the application time of the first beam information may be understood as a time period between a time (which may be understood as an indication time of the first beam information, for example, using a first command to indicate use of the first beam information to transmit the first channel or first reference signal) and the application time of the first beam information; and the second time period being the time period before the application time of the second beam information may be understood as a time period between a time (which may be understood as an indication time of the second beam information, for example, using a second command to indicate use of the second beam information to transmit the second channel or second reference signal) and the application time of the second beam information.

Optionally, in this embodiment of this application, the beam information may include at least one of the following: beam identification information, spatial relation (spatial relation) information, spatial domain transmission filter (spatial domain transmission filter) information, spatial domain reception filter (spatial domain reception filter) information, spatial domain filter (spatial filter) information, transmission configuration indication (TCI) state information, quasi-co-location (QCL) information, and the like.

Downlink beam information may be represented by TCI state information or QCL information. Uplink beam information may be represented by TCI state information or spatial relation information.

In this embodiment of this application, the first beam information and the second beam information are different.

Optionally, in this embodiment of this application, the first beam information is activated, updated, or indicated by a network-side device through a first command.

Optionally, in this embodiment of this application, the first time period is any one of the following:

a time period between a first time and the application time (beam application time) of the first beam information;
a time period between the first time and a feedback time of ACK information corresponding to the first command;
a time period between the first time and a second time, where the second time is a time after first preset duration after the feedback time of the ACK information corresponding to the first command;
a time period between the first time and a feedback time of a hybrid automatic repeat request (Hybrid Automatic Repeat Request, HARQ) of a PDSCH scheduled by the first command; and
a time period between the first time and a time after second preset duration after the feedback time of the HARQ of the PDSCH scheduled by the first command, where
the first time is a time when UE receives the first command or a time when the network-side device sends the first command.

Optionally, in this embodiment of this application, the common beam information is used to determine beam information of a UE-specific channel, for example, common QCL information of a UE-specific (UE-specific) PDCCH or PDSCH, and common uplink spatial domain filter information of a PUSCH based on a dynamic-grant (dynamic-grant) or a static or semi-static configured-grant (configured-grant) and all or some dedicated PUCCH resources.

Optionally, in this embodiment of this application, the common beam information is determined by a unified TCI state or an independent TCI state in a target command, where the target command (for example, a first command or a second command) is used to activate, update, or indicate the first beam information or the second beam information.

Optionally, in this embodiment of this application, the common beam information may be further used for a specific CORESET and a channel associated with the CORESET.

Optionally, in this embodiment of this application, the channel associated with the CORESET may include at least one of the following: a PDCCH in the CORESET, a PDSCH or PUSCH scheduled by the PDCCH in the CORESET, and a channel PUCCH in which HARQ information is located.

Optionally, in this embodiment of this application, the specific CORESET and the channel associated with the CORESET may also use a TCI state indicated by a MAC CE.

Optionally, in this embodiment of this application, the second beam information is any one of the following: common beam information, beam information of a specific CORESET, and beam information indicated by DCI in the specific CORESET.

Optionally, in this embodiment of this application, the specific CORESET (for example, a non-UE-specific CORESET (non-UE-specific CORESET)) is a CORESET whose identifier or index is 0 (that is, CORESET #0).

Optionally, in this embodiment of this application, the second beam information is activated, updated, or indicated by a network-side device through a second command.

It may be understood that in a case that the second beam information is the beam information indicated by the DCI in the specific CORESET, the second command is DCI carried by a PDCCH in the specific CORESET.

Optionally, in this embodiment of this application, the second time period is any one of the following:

a time period between a third time and the application time of the second beam information;
a time period between the third time and a feedback time of ACK information corresponding to the second command;
a time period between the third time and a fourth time, where the fourth time is a time after third preset duration after the feedback time of the ACK information corresponding to the second command;
a time period between the third time and a feedback time of a HARQ of a PDSCH scheduled by the second command;
a time period between the third time and a time after fourth preset duration after the feedback time of the HARQ of the PDSCH scheduled by the second command; and
a time period between a transmission time of DCI in the specific CORESET and a preset time, where the DCI is used to schedule a channel or a reference signal, where
the third time is a time when UE receives the second command or a time when the network-side device sends the second command.

In this embodiment of this application, in a case that the network-side device schedules the PDSCH through the DCI in the specific CORESET, the time period between the transmission time of the DCI and the preset time may be determined as the second time period, where the preset time is a time corresponding to a preset threshold value, and a time interval between the DCI in the specific CORESET and the PDSCH scheduled by the DCI is less than the preset threshold value.

For example, the DCI in the specific CORESET schedules the PDSCH. When the time interval between the DCI and the PDSCH is less than a parameter (such as time duration for QCL (time Duration For QCL)) configured by RRC signaling, a default beam is used to transmit the PDSCH. In this case, a time length (for example, 7/14/28 symbols) between the DCI and the time duration for QCL may be used as the second time period.

Step 202: The target device transmits a target channel or a target reference signal based on the target beam information.

In this embodiment of this application, the target channel is the first channel and/or the second channel, and the target reference signal is the first reference signal and/or the second reference signal.

It may be understood that in one case, when the target device is UE, if uplink transmission is performed, that is, the target beam information is uplink beam information, the target device sends the target channel or the target reference signal based on the target beam information. In another case, when the target device is UE, if downlink transmission is performed, that is, the target beam information is downlink beam information, the target device receives the target channel or the target reference signal based on the target beam information. In still another case, when the target device is a network-side device, if uplink transmission is performed, that is, the target beam information is uplink beam information, the target device receives the target channel or the target reference signal based on the target beam information. In yet another case, when the target device is a network-side device, if downlink transmission is performed, that is, the target beam information is downlink beam information, the target device sends the target channel or the target reference signal based on the target beam information.

Optionally, in this embodiment of this application, the target channel includes at least one of the following:

a non-UE-specific PDSCH;

a UE-specific PDSCH;
a non-UE-specific PDCCH;
a UE-specific PDCCH;
a PUCCH;
a PUSCH;
a PDCCH in the specific CORESET;
a PDSCH associated with the specific CORESET;
a PDSCH scheduled by the DCI in the specific CORESET;
a PUCCH associated with the specific CORESET;
a PUCCH in which a HARQ-ACK of a channel scheduled by the DCI in the specific CORESET is located;
a PUSCH associated with the specific CORESET; and
a PUSCH scheduled by the DCI in the specific CORESET.

Optionally, in this embodiment of this application, the first channel is any one of the following: a non-UE-specific PDSCH, a UE-specific PDSCH, a non-UE-specific PDCCH, a UE-specific PDCCH, a UE-specific PUCCH, a non-UE-specific PUCCH, and a PUSCH.

Optionally, in this embodiment of this application, in a case that the second beam information is the common beam information, the second channel is any one of the following: a non-UE-specific PDSCH, a UE-specific PDSCH, a non-UE-specific PDCCH, a UE-specific PDCCH, a non-UE-specific PUCCH, a UE-specific PUCCH, and a PUSCH.

Optionally, in this embodiment of this application, in a case that the second beam information is the beam information of the specific CORESET, the second channel is any one of the following: a PUCCH, a PUSCH, a PDCCH in the specific CORESET, a PDSCH scheduled by the PDCCH in the specific CORESET, a PUCCH in which a HARQ-ACK of the PDSCH scheduled by the PDCCH in the specific CORESET is located, and a PUSCH scheduled by the PDCCH in the specific CORESET.

Optionally, in this embodiment of this application, in a case that the second beam information is the beam information indicated by the DCI in the specific CORESET, the second channel is any one of the following: a PUCCH, a PUSCH, a PDSCH scheduled by the DCI in the specific CORESET, a PUCCH in which a HARQ-ACK of a channel scheduled by the DCI in the specific CORESET is located, and a PUSCH scheduled by the DCI in the specific CORESET.

Optionally, in an implementation of this embodiment of this application, in a case that the second beam information is the common beam information, the target beam information is any one of the following:

preset common beam information;
beam information previous to the first beam information;
beam information previous to the second beam information; and
the beam information previous to the first beam information and the beam information previous to the second beam information.

Optionally, in another implementation of this embodiment of this application, in a case that the second beam information is the beam information of the specific CORESET or the beam information indicated by the DCI in the specific CORESET, the target beam information is any one of the following:

common beam information previous to common beam information indicated by a first command;
currently used (currently used by UE or a network-side device) common beam information;
beam information previous to the second beam information indicated by a second command;
currently used second beam information;
the beam information of the specific CORESET;
beam information of a search space in which DCI for scheduling the second channel or the second reference signal is located among search spaces associated with the specific CORESET;
beam information indicated when the DCI in the specific CORESET last schedules the second channel or the second reference signal;
beam information with a shorter interval between a use time and a transmission time of the target channel or the target reference signal, in third beam information and fourth beam information, where the third beam information is either of the following: the common beam information previous to the common beam information indicated by the first command and the currently used common beam information, and the fourth beam information is any one of the following: the beam information previous to the second beam information indicated by the second command, the currently used second beam information, the beam information of the specific CORESET, the beam information of the search space in which the DCI for scheduling the second channel or the second reference signal is located among the search spaces associated with the specific CORESET, and the beam information indicated when the DCI in the specific CORESET last schedules the second channel or the second reference signal;

beam information of a CORESET with a smallest identifier among CORESETs monitored by UE in a latest slot on an active BWP of a cell in which the target channel or the target reference signal is located;

beam information of a CORESET with a smallest identifier among CORESETs monitored by the UE on the active BWP of the cell in which the target channel or the target reference signal is located;

beam information of a CORESET with a smallest identifier among CORESETs monitored by the UE in the latest slot on a reference component carrier (Component Carrier, CC) or a reference BWP;

beam information of a CORESET with a smallest identifier among CORESETs monitored by the UE on the reference CC or the reference BWP;

active beam information corresponding to a smallest code point in active beam information applied to the target channel or the target reference signal on the active BWP of the cell in which the target channel or the target reference signal is located; and

active beam information corresponding to a smallest code point in active beam information applied to the target channel or the target reference signal on the reference CC or the reference BWP.

It should be noted that the use time in this embodiment of this application refers to a use time of a piece of beam information, that is, a time when a piece of beam information is used to transmit a channel or a reference signal. For example, the beam information with the shorter interval between the use time and the transmission time of the target channel or the target reference signal refers to recently or latest used beam information for transmitting a channel or a reference signal before the transmission time of the target channel or the target reference signal.

Optionally, in this embodiment of this application, the reference CC is any one of the following:

a CC in a group of CCs corresponding to the first beam information;
a CC in a group of CCs corresponding to the second beam information; and
a CC among CCs configured with a specific CORESET.

Optionally, in this embodiment of this application, the reference BWP is any one of the following:

a BWP in a group of BWPs corresponding to the first beam information;
a BWP in a group of BWPs corresponding to the second beam information; and
a BWP among BWPs configured with a specific CORESET.

Optionally, in this embodiment of this application, the CORESET monitored by the UE is a UE-specific CORESET monitored by the UE; or the CORESET monitored by the UE is a non-UE-specific CORESET monitored by the UE.

Optionally, in this embodiment of this application, the CORESET with the smallest identifier and the specific CORESET correspond to a same CORESET pool index.

Optionally, in this embodiment of this application, the active beam information applied to the target channel or the target reference signal and the specific CORESET correspond to a same CORESET pool index (CORESET Pool Index).

Optionally, in this embodiment of this application, the CORESET with the smallest identifier and the target channel or the target reference signal correspond to a same CORESET pool index.

Optionally, in this embodiment of this application, the active beam information corresponding to the smallest code point includes: beam information corresponding to a smallest TCI code point among TCI code points corresponding to a plurality of pieces of different beam information in the active beam information of the target channel or the target reference signal.

Optionally, in this embodiment of this application, the first time period is a time period from a time T1 to a time T2, and the second time period is a time period from a time T3 to a time T4.

If T1 < T3, in a time period from the time T1 to the time T3, beam information of the target channel or the target reference signal is any one of the following: preset common beam information, beam information previous to the first beam information, common beam information previous to common beam information indicated by a first command, and currently used common beam information.

It may be understood that when T1 < T3, the first beam information indicated by the first command has not taken effect, and a second command has not been transmitted.

If T3 < T1, in a time period from the time T3 to the time T1, beam information of the target channel or the target reference signal is any one of the following:

preset common beam information, beam information previous to the second beam information, beam information previous to the second beam information indicated by the second command, currently used second beam information, beam information of a specific CORESET, beam information of a search space in which DCI for scheduling the second channel or the second reference signal is located among search spaces associated with the specific CORESET, beam information indicated when the DCI in the specific CORESET last schedules the second channel or the second reference signal, beam information of a CORESET with a smallest identifier among CORESETs monitored by UE in a latest slot on an active BWP of a cell in which the target channel or the target reference signal is located, beam information of a CORESET with a smallest identifier among CORESETs monitored by the UE on the active BWP of the cell in which the target channel or the target reference signal is located, beam information of a CORESET with a smallest identifier among CORESETs monitored by the UE in the latest slot on a reference component carrier CC or a reference BWP, beam information of a CORESET with a smallest identifier among CORESETs monitored by the UE on the reference CC or the reference BWP, active beam information corresponding to a smallest code point in active beam information applied to the target channel or the target reference signal on the active BWP of the cell in which the target channel or the target reference signal is located, and active beam information corresponding to a smallest code point in active beam information applied to the target channel or the target reference signal on the reference CC or the reference BWP.

It may be understood that when $T3 < T1$, the second beam information indicated by the second command has not taken effect, and the first command has not been transmitted.

Optionally, in this embodiment of this application, if $T2 < T4$, in a time period from the time T2 to the time T4, beam information of the target channel or the target reference signal is the first beam information.

It may be understood that if $T2 < T4$, in the time period from the time T2 to the time T4, the first beam information indicated by the first command has taken effect, but the second beam information indicated by the second command has not taken effect. Therefore, in this time period, the first beam information can be used to transmit the target channel or the target reference signal.

If $T4 < T2$, in a time period from the time T4 to the time T2, beam information of the target channel or the target reference signal is the second beam information.

It may be understood that if $T4 < T2$, in the time period from the time T4 to the time T2, the first beam information indicated by the first command has not taken effect, but the second beam information indicated by the second command has taken effect. Therefore, in this time period, the second beam information can be used to transmit the target channel or the target reference signal.

Optionally, in this embodiment of this application, if $T2 < T4$, after the time T4, beam information of the first channel or the first reference signal is the first beam information or the second beam information, and beam information of the second channel or the second reference signal is the first beam information or the second beam information.

It may be understood that if $T2 < T4$, after the time T4, the first beam information indicated by the first command and the second beam information indicated by the second command have both taken effect. Therefore, after the time T4, the beam information indicated by the first command or the second command may be used to transmit the first channel or the first reference signal, or the beam information indicated by the first command or the second command may be used to transmit the second channel or the second reference signal.

If $T4 < T2$, after the time T2, beam information of the first channel or the first reference signal is the first beam information or the second beam information, and beam information of the second channel or the second reference signal is the first beam information or the second beam information.

It may be understood that if $T4 < T2$, after the time T2, the first beam information indicated by the first command and the second beam information indicated by the second command have both taken effect. Therefore, after the time T2, the beam information indicated by the first command or the second command may be used to transmit the first channel or the first reference signal, or the beam information indicated by the first command or the second command may be used to transmit the second channel or the second reference signal.

Optionally, in this embodiment of this application, in a case that the second beam information is the common beam information or the beam information of the specific CORESET, and in a case that a HARQ-ACK of a first command and a HARQ-ACK of a second command are both sent on a first uplink channel, beam information of the first uplink channel is any one of the following:

common beam information previous to common beam information indicated by the first command;
currently used common beam information;
beam information previous to the second beam information indicated by the second command;
currently used second beam information;
beam information with a shorter interval between a use time and a transmission time of the first uplink channel, in the common beam information previous to the common beam information indicated by the first command and the beam information previous to the second beam information indicated by the second command;
beam information with a shorter interval between a use time and a transmission time of the first uplink channel, in the currently used common beam information and the currently used second beam information; and
beam information indicated by a network-side device for the first uplink channel.

Optionally, in this embodiment of this application, in a case that the second beam information is the beam information indicated by the DCI in the specific CORESET, and in a case that a HARQ-ACK of a first command and a target HARQ-ACK are both sent on a first uplink channel, beam information of the first uplink channel is any one of the following:

common beam information previous to common beam information indicated by the first command;
currently used common beam information;
the beam information of the specific CORESET;
beam information of a search space in which DCI for scheduling the second channel or the second reference signal is located among search spaces associated with the specific CORESET;
beam information indicated when the DCI in the specific CORESET last schedules the second channel or the second reference signal;
beam information indicated when the DCI in the specific CORESET schedules the second channel or the second reference signal;
beam information with a shorter interval between a use time and a transmission time of the first uplink channel, in fifth beam information and sixth beam information, where the fifth beam information is either of the following: the common beam information previous to the common beam information indicated by the first command and the currently used common beam information, and the sixth beam information is any one of the following: the beam information of the specific CORESET, the beam information of the search space in which the DCI for scheduling the second channel or the second reference signal is located among the search spaces associated with the specific CORESET, the beam information indicated when the DCI in the specific CORESET last schedules the second channel or the second reference signal, and the beam information indicated when the DCI in the specific CORESET schedules the second channel or the second reference signal;
beam information indicated by a network-side device for the first uplink channel; and
preset beam information corresponding to a target identifier in a case that a first condition is met, where the first condition is that the first uplink channel and the specific CORESET correspond to different TRP identification information (for example, CORESET pool indexes) or that the uplink channel and the specific CORESET correspond to different physical cell identifiers (Physical Cell Identity, PCI), where the target identifier is either of the following: a TRP identifier corresponding to the first uplink channel and a PCI corresponding to the first uplink channel, where the target HARQ-ACK is a HARQ-ACK of the DCI or a HARQ-ACK of the channel or reference signal scheduled by the DCI.

Optionally, in this embodiment of this application, the beam information of the first uplink channel and the specific CORESET correspond to same TRP identification information or correspond to different TRP identification information.

Optionally, in this embodiment of this application, the beam information of the first uplink channel and the specific CORESET correspond to a same PCI or different PCIs.

It may be understood that the HARQ-ACK of the first command and the HARQ-ACK of the second command are both sent on the first uplink channel, and the HARQ-ACK of the first command and the target HARQ-ACK are both sent on the first uplink channel. Usually, it means that HARQ-ACKs of a plurality of commands are multiplexed and transmitted on one PUCCH channel.

Optionally, in this embodiment of this application, in a case that the transmission time of the first uplink channel overlaps a transmission time of a second uplink channel, if HARQ-ACK information on the first uplink channel and information on the second uplink channel are multiplexed on a third uplink channel, beam information of the third uplink channel is any one of the following:

the beam information of the third uplink channel;
the beam information of the first uplink channel; and
beam information of the second uplink channel.

Optionally, in this embodiment of this application, the third uplink channel may be any one of the following: the first uplink channel, the second uplink channel, or an uplink channel different from the first uplink channel and the second uplink channel.

For example, the first uplink channel is a PUCCH, where the PUCCH may carry a plurality of HARQ-ACKs, and the second uplink channel is a PUSCH. When a transmission time of the PUCCH overlaps a transmission time of the PUSCH, information on the PUCCH may be multiplexed on the PUSCH for transmission, and in this case, the PUSCH is the third channel; or information on the PUCCH and information on the PUSCH may be both multiplexed on another PUSCH, and in this case, the other PUSCH is the third channel.

In the method for determining beam information according to this embodiment of this application, when the first time period overlaps the second time period, the target device can determine the beam information in the overlapping time period, and transmit the channel or the reference signal based on the beam information, where the first time period is the time period before the application time of the first beam information, and the second time period is the time period before the application time of the second beam information. In this solution, when the time overlap occurs before the first beam information and the second beam information take effect, that is, when the time overlap occurs before different beam information indicated by the network-side device takes effect, the target device can determine the beam information in the overlapping time period, to transmit the channel or the reference signal in the overlapping time period by using the beam information, and ensure that the UE and the network-side device can accurately transmit the channel or the reference signal.

It should be noted that the method for determining beam information according to this embodiment of this application may be performed by the target device, an apparatus for determining beam information, or a control module for performing the method for determining beam information in the apparatus for determining beam information. The method for determining beam information according to this embodiment of this application is described by assuming that the method for determining beam information in this embodiment of this application is performed by the target device.

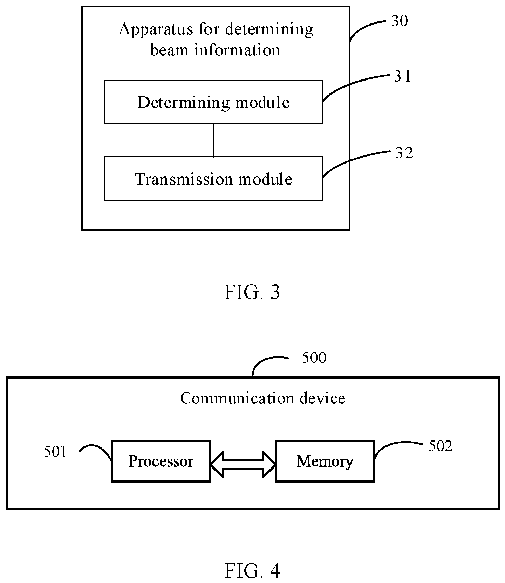

FIG. 3 is a schematic diagram of a possible structure of an apparatus for determining beam information according to an embodiment of this application. As shown in FIG. 3, the apparatus 30 for determining beam information may include a determining module 31 and a transmission module 32.

The determining module 31 is configured to determine target beam information in a case that a first time period overlaps a second time period, where the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information. The transmission module 32 is configured to transmit a target channel or a target reference signal based on the target beam information determined by the determining module 31, where the target channel is the first channel and/or the second channel, and the target reference signal is the first reference signal and/or the second reference signal.

This embodiment of this application provides an apparatus for determining beam information. When the time overlap occurs before the first beam information and the second beam information take effect, that is, when the time overlap occurs before different beam information indicated by a network-side device takes effect, the apparatus for determining beam information can determine the beam information in the overlapping time period, to transmit the channel or the reference signal in the overlapping time period by using the beam information, and ensure that UE and the network-side device can accurately transmit the channel or the reference signal.

In a possible implementation, the second beam information is any one of the following: common beam information, beam information of a specific CORESET, and beam information indicated by DCI in the specific CORESET.

In a possible implementation, the first beam information is activated, updated, or indicated by a network-side device through a first command; and the first time period is any one of the following:

a time period between a first time and the application time of the first beam information;
a time period between the first time and a feedback time of ACK information corresponding to the first command;
a time period between the first time and a second time, where the second time is a time after first preset duration after the feedback time of the ACK information corresponding to the first command;
a time period between the first time and a feedback time of a HARQ of a PDSCH scheduled by the first command; and
a time period between the first time and a time after second preset duration after the feedback time of the HARQ of the PDSCH scheduled by the first command, where
the first time is a time when UE receives the first command or a time when the network-side device sends the first command.

In a possible implementation, the second beam information is activated, updated, or indicated by a network-side device through a second command; and the second time period is any one of the following:

a time period between a third time and the application time of the second beam information;
a time period between the third time and a feedback time of ACK information corresponding to the second command;
a time period between the third time and a fourth time, where the fourth time is a time after third preset duration after the feedback time of the ACK information corresponding to the second command;
a time period between the third time and a feedback time of a HARQ of a PDSCH scheduled by the second command;
a time period between the third time and a time after fourth preset duration after the feedback time of the HARQ of the PDSCH scheduled by the second command; and

a time period between a transmission time of DCI in the specific CORESET and a preset time, where the DCI is used to schedule a channel or a reference signal, where

the third time is a time when UE receives the second command or a time when the network-side device sends the second command.

In a possible implementation, the common beam information is used to determine beam information of a UE-specific channel; and/or the common beam information is determined by a unified TCI state or an independent TCI state in a target command, where the target command is used to activate, update, or indicate the first beam information or the second beam information; and/or the common beam information is used for the specific CORESET and a channel associated with the CORESET.

In a possible implementation, the second beam information is the common beam information; and the target beam information is any one of the following:

preset common beam information;

beam information previous to the first beam information;

beam information previous to the second beam information; and

the beam information previous to the first beam information and the beam information previous to the second beam information.

In a possible implementation, the second beam information is the beam information of the specific CORESET or the beam information indicated by the DCI in the specific CORESET; and the target beam information is any one of the following:

common beam information previous to common beam information indicated by a first command;

currently used common beam information;

beam information previous to the second beam information indicated by a second command;

currently used second beam information;

the beam information of the specific CORESET;

beam information of a search space in which DCI for scheduling the second channel or the second reference signal is located among search spaces associated with the specific CORESET;

beam information indicated when the DCI in the specific CORESET last schedules the second channel or the second reference signal;

beam information with a shorter interval between a use time and a transmission time of the target channel or the target reference signal, in third beam information and fourth beam information, where the third beam information is either of the following: the common beam information previous to the common beam information indicated by the first command and the currently used common beam information, and the fourth beam information is any one of the following: the beam information previous to the second beam information indicated by the second command, the currently used second beam information, the beam information of the specific CORESET, the beam information of the search space in which the DCI for scheduling the second channel or the second reference signal is located among the search spaces associated with the specific CORESET, and the beam information indicated when the DCI in the specific CORESET last schedules the second channel or the second reference signal;

beam information of a CORESET with a smallest identifier among CORESETs monitored by UE in a latest slot on an active BWP of a cell in which the target channel or the target reference signal is located;

beam information of a CORESET with a smallest identifier among CORESETs monitored by the UE on the active BWP of the cell in which the target channel or the target reference signal is located;

beam information of a CORESET with a smallest identifier among CORESETs monitored by the UE in the latest slot on a reference CC or a reference BWP;

beam information of a CORESET with a smallest identifier among CORESETs monitored by the UE on the reference CC or the reference BWP;

active beam information corresponding to a smallest code point in active beam information applied to the target channel or the target reference signal on the active BWP of the cell in which the target channel or the target reference signal is located; and

active beam information corresponding to a smallest code point in active beam information applied to the target channel or the target reference signal on the reference CC or the reference BWP.

In a possible implementation, the reference CC is any one of the following:

a CC in a group of CCs corresponding to the first beam information;

a CC in a group of CCs corresponding to the second beam information; and
a CC among CCs configured with a specific CORESET.

In a possible implementation, the reference BWP is any one of the following:

a BWP in a group of BWPs corresponding to the first beam information;
a BWP in a group of BWPs corresponding to the second beam information; and
a BWP among BWPs configured with a specific CORESET.

In a possible implementation, the CORESET monitored by the UE is a UE-specific CORESET monitored by the UE; or the CORESET monitored by the UE is a non-UE-specific CORESET monitored by the UE.

In a possible implementation, the CORESET with the smallest identifier and the specific CORESET correspond to a same CORESET pool index; and/or the active beam information applied to the target channel or the target reference signal and the specific CORESET correspond to a same CORESET pool index; and/or the CORESET with the smallest identifier and the target channel or the target reference signal correspond to a same CORESET pool index.

In a possible implementation, the active beam information corresponding to the smallest code point includes: beam information corresponding to a smallest TCI code point among TCI code points corresponding to a plurality of pieces of different beam information in the active beam information of the target channel or the target reference signal.

In a possible implementation, the first time period is a time period from a time T1 to a time T2, and the second time period is a time period from a time T3 to a time T4; and

if T1 < T3, in a time period from the time T1 to the time T3, beam information of the target channel or the target reference signal is any one of the following: preset common beam information, beam information previous to the first beam information, common beam information previous to common beam information indicated by a first command, and currently used common beam information; or
if T3 < T1, in a time period from the time T3 to the time T1, beam information of the target channel or the target reference signal is any one of the following:
preset common beam information, beam information previous to the second beam information, beam information previous to the second beam information indicated by a second command, currently used second beam information, beam information of a specific CORESET, beam information of a search space in which DCI for scheduling the second channel or the second reference signal is located among search spaces associated with the specific CORESET, beam information indicated when the DCI in the specific CORESET last schedules the second channel or the second reference signal, beam information of a CORESET with a smallest identifier among CORESETs monitored by UE in a latest slot on an active BWP of a cell in which the target channel or the target reference signal is located, beam information of a CORESET with a smallest identifier among CORESETs monitored by the UE on the active BWP of the cell in which the target channel or the target reference signal is located, beam information of a CORESET with a smallest identifier among CORESETs monitored by the UE in the latest slot on a reference component carrier CC or a reference BWP, beam information of a CORESET with a smallest identifier among CORESETs monitored by the UE on the reference CC or the reference BWP, active beam information corresponding to a smallest code point in active beam information applied to the target channel or the target reference signal on the active BWP of the cell in which the target channel or the target reference signal is located, and active beam information corresponding to a smallest code point in active beam information applied to the target channel or the target reference signal on the reference CC or the reference BWP.

In a possible implementation, the first time period is a time period from a time T1 to a time T2, and the second time period is a time period from a time T3 to a time T4; and

if T2 < T4, in a time period from the time T2 to the time T4, beam information of the target channel or the target reference signal is the first beam information; or
if T4 < T2, in a time period from the time T4 to the time T2, beam information of the target channel or the target reference signal is the second beam information.

In a possible implementation, if T2 < T4, after the time T4, beam information of the first channel or the first reference signal is the first beam information or the second beam information, and beam information of the second channel or the second reference signal is the first beam information or the second beam information; or if T4 < T2, after the time T2, beam information of the first channel or the first reference signal is the first beam information or the second beam information, and beam information of the second channel or the second reference signal is the first beam information or the second beam information.

In a possible implementation, the second beam information is the common beam information or the beam information of the specific CORESET; and in a case that a HARQ-ACK of a first command and a HARQ-ACK of a second command are both sent on a first uplink channel, beam information of the first uplink channel is any one of the following:

common beam information previous to common beam information indicated by the first command;
currently used common beam information;
beam information previous to the second beam information indicated by the second command;
currently used second beam information;
beam information with a shorter interval between a use time and a transmission time of the first uplink channel, in the common beam information previous to the common beam information indicated by the first command and the beam information previous to the second beam information indicated by the second command;
beam information with a shorter interval between a use time and a transmission time of the first uplink channel, in the currently used common beam information and the currently used second beam information; and
beam information indicated by a network-side device for the first uplink channel.

In a possible implementation, the second beam information is the beam information indicated by the DCI in the specific CORESET; and in a case that a HARQ-ACK of a first command and a target HARQ-ACK are both sent on a first uplink channel, beam information of the first uplink channel is any one of the following:

common beam information previous to common beam information indicated by the first command;
currently used common beam information;
the beam information of the specific CORESET;
beam information of a search space in which DCI for scheduling the second channel or the second reference signal is located among search spaces associated with the specific CORESET;
beam information indicated when the DCI in the specific CORESET last schedules the second channel or the second reference signal;
beam information indicated when the DCI in the specific CORESET schedules the second channel or the second reference signal;
beam information with a shorter interval between a use time and a transmission time of the first uplink channel, in fifth beam information and sixth beam information, where the fifth beam information is either of the following: the common beam information previous to the common beam information indicated by the first command and the currently used common beam information, and the sixth beam information is any one of the following: the beam information of the specific CORESET, the beam information of the search space in which the DCI for scheduling the second channel or the second reference signal is located among the search spaces associated with the specific CORESET, the beam information indicated when the DCI in the specific CORESET last schedules the second channel or the second reference signal, and the beam information indicated when the DCI in the specific CORESET schedules the second channel or the second reference signal;
beam information indicated by a network-side device for the first uplink channel; and
preset beam information corresponding to a target identifier in a case that a first condition is met, where the first condition is that the first uplink channel and the specific CORESET correspond to different TRP identification information or that the uplink channel and the specific CORESET correspond to different PCIs, where the target identifier is either of the following: a TRP identifier corresponding to the first uplink channel and a PCI corresponding to the first uplink channel, where
the target HARQ-ACK is a HARQ-ACK of the DCI or a HARQ-ACK of the channel or reference signal scheduled by the DCI.

In a possible implementation, the beam information of the first uplink channel and the specific CORESET correspond to same TRP identification information or correspond to different TRP identification information; and the beam information of the first uplink channel and the specific CORESET correspond to a same PCI or different PCIs.

In a possible implementation, in a case that the transmission time of the first uplink channel overlaps a transmission time of a second uplink channel, if HARQ-ACK information on the first uplink channel and information on the second uplink channel are multiplexed on a third uplink channel, beam information of the third uplink channel is any one of the following:

the beam information of the third uplink channel;
the beam information of the first uplink channel; and
beam information of the second uplink channel.

In a possible implementation, the target channel includes at least one of the following:

a non-UE-specific PDSCH;
a UE-specific PDSCH;
a non-UE-specific PDCCH;
a UE-specific PDCCH;
a PUCCH;
a PUSCH;
a PDCCH in the specific CORESET;
a PDSCH associated with the specific CORESET;
a PDSCH scheduled by the DCI in the specific CORESET;
a PUCCH associated with the specific CORESET;
a PUCCH in which a HARQ-ACK of a channel scheduled by the DCI in the specific CORESET is located;
a PUSCH associated with the specific CORESET; and
a PUSCH scheduled by the DCI in the specific CORESET.

In a possible implementation, the specific CORESET is a CORESET whose identifier or index is 0.

The apparatus for determining beam information in this embodiment of this application may be an apparatus, or an apparatus or a target device (that is, UE or a network-side device) with an operating system, or may be a component, an integrated circuit, or a chip in a target device. The apparatus or UE may be a mobile terminal, or may be a nonmobile terminal. For example, the mobile terminal may include but is not limited to the foregoing illustrated type of the UE 11. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The apparatus for determining beam information according to this embodiment of this application can implement each process of the foregoing method embodiment, with the same technical effect achieved. To avoid repetition, details are not described herein again.

Optionally, as shown in FIG. 4, an embodiment of this application further provides a communication device 500, including a processor 501, a memory 502, and a program or instructions stored in the memory 502 and exectuable on the processor 501. For example, when the communication device 500 is a target device, and the program or instructions are executed by the processor 501, each process of the foregoing method embodiment is implemented, with the same technical effect achieved.

An embodiment of this application further provides a target device, including a processor and a communication interface. The processor is configured to determine target beam information in a case that a first time period overlaps a second time period, where the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information. The communication interface is configured to transmit a target channel or a target reference signal based on the target beam information, where the target channel is the first channel and/or the second channel, and the target reference signal is the first reference signal and/or the second reference signal. The target device embodiment corresponds to the foregoing method embodiment on the target device side, and each implementation process and implementation of the foregoing method embodiment can be applied to the target device embodiment, with the same technical effect achieved.

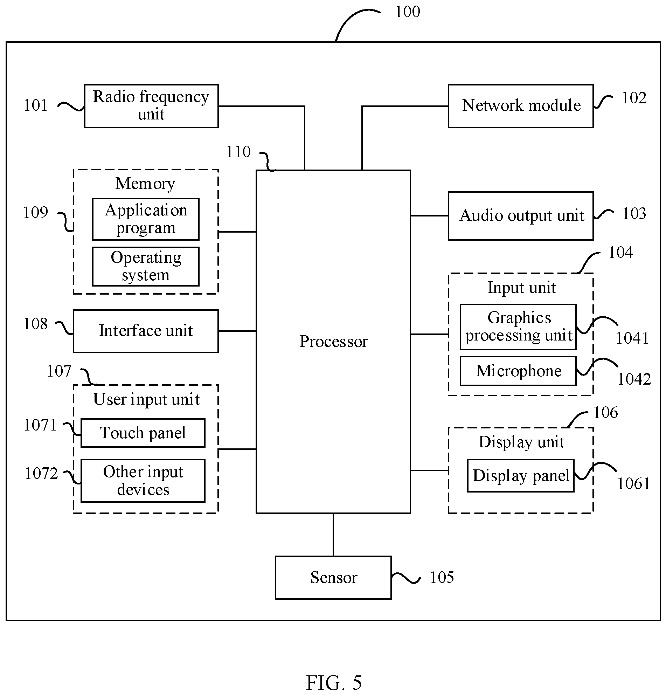

Specifically, the target device is UE. FIG. 5 is a schematic diagram of a hardware structure of UE for implementing an embodiment of this application.

The UE 100 includes but is not limited to at least some components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the UE 100 may further include a power supply (such as a battery) for supplying power to the components. The power supply may be logically connected to the processor 110 through a power management system. In this way, functions such as charge management, discharge management, and power consumption management are implemented by using the power management system. The structure of the UE shown in FIG. 5 does not constitute a limitation on the UE. The UE may include more or fewer components than those shown in the figure, or some components are combined, or component arrangements are different. Details are not described herein again.

It should be understood that, in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function key (such as a volume control button or a power button), a trackball, a mouse, and a joystick. Details are not described herein again.

In this embodiment of this application, after receiving downlink data from a network-side device, the radio frequency unit 101 sends the downlink data to the processor 110 for processing, and in addition, sends uplink data to the network-side device. Generally, the radio frequency unit 101 includes but is not limited to an antenna, at least one amplifier, a transceiver, a coupler, a low noise amplifier, a duplexer, and the like.

The memory 109 may be configured to store software programs or instructions and various data. The memory 109 may primarily include a program or instruction storage area and a data storage area. The program or instruction storage area may store an operating system, an application program or instructions (such as an audio play function and an image play function) required by at least one function, and the like. In addition, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 110 may include one or more processing units. Optionally, the processor 110 may integrate an application processor and a modem processor. The application processor mainly processes the operating system, a user interface, an application program or an instruction, and the like. The modem processor mainly processes wireless communication. For example, the modem processor is a baseband processor. It may be understood that the modem processor may alternatively not be integrated in the processor 110.

The processor 110 is configured to determine target beam information in a case that a first time period overlaps a second time period, where the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information.

The radio frequency unit 101 is configured to transmit a target channel or a target reference signal based on the target beam information, where the target channel is the first channel and/or the second channel, and the target reference signal is the first reference signal and/or the second reference signal.

This embodiment of this application provides UE. When the time overlap occurs before the first beam information and the second beam information take effect, that is, when the time overlap occurs before different beam information indicated by the network-side device takes effect, the UE can determine the beam information in the overlapping time period, to transmit the channel or the reference signal in the overlapping time period by using the beam information, and ensure that the UE can accurately transmit the channel or the reference signal.

The UE provided in this embodiment of this application can implement each process implemented by the foregoing method embodiment, with the same technical effect achieved. To avoid repetition, details are not described herein again.

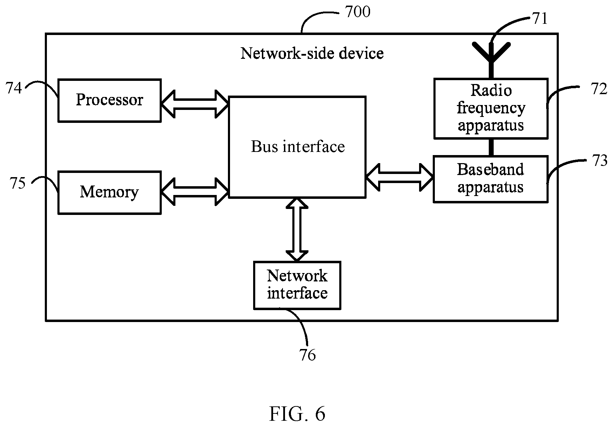

Specifically, the foregoing target device is a network-side device. As shown in FIG. 6, the network-side device 700 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes to-be-sent information, and sends the information to the radio frequency apparatus 72; and the radio frequency apparatus 72 processes the received information and then sends the information out by using the antenna 71.

The radio frequency apparatus may be located in the baseband apparatus 73. The method performed by the network-side device in the foregoing embodiment may be implemented in the baseband apparatus 73, and the baseband apparatus 73 includes a processor 74 and a memory 75.

The baseband apparatus 73 may include, for example, at least one baseband processing unit, where a plurality of chips are disposed on the baseband processing unit. As shown in FIG. 6, one of the chips is, for example, the processor 74, connected to the memory 75, to invoke a program in the memory 75 to perform the operation of the network-side device shown in the foregoing method embodiment.

The baseband apparatus 73 may further include a network interface 76, configured to exchange information with the radio frequency apparatus 72, where the interface is, for example, a common public radio interface (Common Public Radio Interface, CPRI).

The processor 74 is configured to determine target beam information in a case that a first time period overlaps a second time period, where the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information.

The radio frequency apparatus 72 is configured to transmit a target channel or a target reference signal based on the target beam information determined by the processor 74, where the target channel is the first channel and/or the second channel, and the target reference signal is the first reference signal and/or the second reference signal.

This embodiment of this application provides a network-side device. When the time overlap occurs before the first beam information and the second beam information take effect, that is, when the time overlap occurs before different beam information indicated by the network-side device takes effect, the network-side device can determine the beam information in the overlapping time period, to transmit the channel or the reference signal in the overlapping time period by using the beam information, and ensure that the network-side device can accurately transmit the channel or the reference signal.

The network-side device provided in this embodiment of this application can implement each process implemented by the foregoing method embodiment, with the same technical effect achieved. To avoid repetition, details are not described herein again.

Specifically, the network-side device in this embodiment of this application further includes a program or instructions stored in the memory 75 and exectuable on the processor 74. When the processor 74 invokes the program or instructions in the memory 75, the method performed by each module or unit is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the method for determining beam information is implemented, with the same technical effect achieved. To avoid repetition, details are not described herein again.

The processor is a processor in the UE or network-side device described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip, where the chip includes a processor and a communication interface, the communication interface is coupled to the processor, and the processor is configured to run a program or instructions to implement each process of the foregoing embodiment of the method for determining beam information, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1. A method for determining beam information, comprising:

   in a case that a first time period overlaps a second time period, determining target beam information, wherein the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information; and

   transmitting a target channel or a target reference signal based on the target beam information, wherein the target channel is the first channel and/or the second channel, and the target reference signal is the first reference signal and/or the second reference signal.

2. The method according to claim 1, wherein the second beam information is any one of following: the common beam information, beam information of a specific control resource set CORESET, and beam information indicated by downlink control information DCI in the specific CORESET.

3. The method according to claim 1 or 2, wherein the first beam information is activated, updated, or indicated by a network-side device through a first command; and
   the first time period is any one of following:

   a time period between a first time and the application time of the first beam information;
   a time period between the first time and a feedback time of acknowledgement ACK information corresponding to the first command;
   a time period between the first time and a second time, wherein the second time is a time after first preset duration after the feedback time of the ACK information corresponding to the first command;
   a time period between the first time and a feedback time of a hybrid automatic repeat request HARQ of a physical downlink shared channel PDSCH scheduled by the first command; and
   a time period between the first time and a time after second preset duration after the feedback time of the HARQ of the PDSCH scheduled by the first command, wherein
   the first time is a time when user equipment UE receives the first command or a time when the network-side device sends the first command.

4. The method according to claim 1 or 2, wherein the second beam information is activated, updated, or indicated by a network-side device through a second command; and
   the second time period is any one of following:

   a time period between a third time and the application time of the second beam information;
   a time period between the third time and a feedback time of ACK information corresponding to the second command;
   a time period between the third time and a fourth time, wherein the fourth time is a time after third preset duration after the feedback time of the ACK information corresponding to the second command;
   a time period between the third time and a feedback time of a HARQ of a PDSCH scheduled by the second command;
   a time period between the third time and a time after fourth preset duration after the feedback time of the HARQ of the PDSCH scheduled by the second command; and
   a time period between a transmission time of DCI in a specific CORESET and a preset time, wherein the DCI is used to schedule a channel or a reference signal, wherein
   the third time is a time when UE receives the second command or a time when the network-side device sends the second command.

5. The method according to claim 1 or 2, wherein the common beam information is used to determine beam information of a UE-specific channel;

   and/or

   the common beam information is determined by a unified transmission configuration indication TCI state or an independent TCI state in a target command, wherein the target command is used to activate, update, or indicate the first beam information or the second beam information;

   and/or

   the common beam information is used for a specific CORESET and a channel associated with the CORESET.

6. The method according to claim 1 or 2, wherein the second beam information is the common beam information; and the target beam information is any one of following:

   preset common beam information;

   beam information previous to the first beam information;

   beam information previous to the second beam information; and

   the beam information previous to the first beam information and the beam information previous to the second beam information.

7. The method according to claim 1 or 2, wherein the second beam information is beam information of a specific CORESET or beam information indicated by DCI in the specific CORESET; and the target beam information is any one of following:

   common beam information previous to common beam information indicated by a first command;

   currently used common beam information;

   beam information previous to second beam information indicated by a second command;

   currently used second beam information;

   the beam information of the specific CORESET;

   beam information of a search space in which DCI for scheduling the second channel or the second reference signal is located among search spaces associated with the specific CORESET;

   beam information indicated when the DCI in the specific CORESET last schedules the second channel or the second reference signal;

   beam information with a shorter interval between a use time and a transmission time of the target channel or the target reference signal, in third beam information and fourth beam information, wherein the third beam information is either of following: the common beam information previous to the common beam information indicated by the first command and the currently used common beam information, and the fourth beam information is any one of following: the beam information previous to the second beam information indicated by the second command, the currently used second beam information, the beam information of the specific CORESET, the beam information of the search space in which the DCI for scheduling the second channel or the second reference signal is located among the search spaces associated with the specific CORESET, and the beam information indicated when the DCI in the specific CORESET last schedules the second channel or the second reference signal;

   beam information of a CORESET with a smallest identifier among CORESETs monitored by UE in a latest slot on an active bandwidth part BWP of a cell in which the target channel or the target reference signal is located;

   beam information of a CORESET with a smallest identifier among CORESETs monitored by the UE on the active BWP of the cell in which the target channel or the target reference signal is located;

   beam information of a CORESET with a smallest identifier among CORESETs monitored by the UE in a latest slot on a reference component carrier CC or a reference BWP;

   beam information of a CORESET with a smallest identifier among CORESETs monitored by the UE on the reference CC or the reference BWP;

   active beam information corresponding to a smallest code point in active beam information applied to the target channel or the target reference signal on the active BWP of the cell in which the target channel or the target reference signal is located; and

   active beam information corresponding to a smallest code point in active beam information applied to the target channel or the target reference signal on the reference CC or the reference BWP.

8. The method according to claim 7, wherein the reference CC is any one of following:

a CC in a group of CCs corresponding to the first beam information;
a CC in a group of CCs corresponding to the second beam information; and
a CC among CCs configured with a specific CORESET; and
the reference BWP is any one of following:

a BWP in a group of BWPs corresponding to the first beam information;
a BWP in a group of BWPs corresponding to the second beam information; and
a BWP among BWPs configured with a specific CORESET.

9. The method according to claim 7, wherein the CORESET monitored by the UE is a UE-specific CORESET monitored by the UE; or
the CORESET monitored by the UE is a non-UE-specific CORESET monitored by the UE.

10. The method according to claim 7, wherein the CORESET with the smallest identifier and the specific CORESET correspond to a same CORESET pool index; and/or

the active beam information applied to the target channel or the target reference signal and the specific CORESET correspond to a same CORESET pool index; and/or
the CORESET with the smallest identifier and the target channel or the target reference signal correspond to a same CORESET pool index.

11. The method according to claim 7, wherein the active beam information corresponding to the smallest code point comprises: beam information corresponding to a smallest TCI code point among TCI code points corresponding to a plurality of pieces of different beam information in the active beam information of the target channel or the target reference signal.

12. The method according to claim 1, wherein the first time period is a time period from a time T1 to a time T2, and the second time period is a time period from a time T3 to a time T4; and

if T1 is less than T3, in a time period from the time T1 to the time T3, beam information of the target channel or the target reference signal is any one of following: preset common beam information, beam information previous to the first beam information, common beam information previous to common beam information indicated by a first command, and currently used common beam information; or
if T3 is less than T1, in a time period from the time T3 to the time T1, beam information of the target channel or the target reference signal is any one of following:

preset common beam information, beam information previous to the second beam information, beam information previous to the second beam information indicated by a second command, currently used second beam information, beam information of a specific CORESET, beam information of a search space in which DCI for scheduling the second channel or the second reference signal is located among search spaces associated with the specific CORESET, beam information indicated when the DCI in the specific CORESET last schedules the second channel or the second reference signal, beam information of a CORESET with a smallest identifier among CORESETs monitored by UE in a latest slot on an active BWP of a cell in which the target channel or the target reference signal is located, beam information of a CORESET with a smallest identifier among CORESETs monitored by the UE on the active BWP of the cell in which the target channel or the target reference signal is located, beam information of a CORESET with a smallest identifier among CORESETs monitored by the UE in a latest slot on a reference component carrier CC or a reference BWP, beam information of a CORESET with a smallest identifier among CORESETs monitored by the UE on the reference CC or the reference BWP, active beam information corresponding to a smallest code point in active beam information applied to the target channel or the target reference signal on the active BWP of the cell in which the target channel or the target reference signal is located, and active beam information corresponding to a smallest code point in active beam information applied to the target channel or the target reference signal on the reference CC or the reference BWP.

13. The method according to claim 1, wherein the first time period is a time period from a time T1 to a time T2, and the second time period is a time period from a time T3 to a time T4; and

if T2 is less than T4, in a time period from the time T2 to the time T4, beam information of the target channel or the target reference signal is the first beam information; or

if T4 is less than T2, in a time period from the time T4 to the time T2, beam information of the target channel or the target reference signal is the second beam information.

14. The method according to claim 12 or 13, wherein

if T2 is less than T4, after the time T4, beam information of the first channel or the first reference signal is the first beam information or the second beam information, and beam information of the second channel or the second reference signal is the first beam information or the second beam information; or

if T4 is less than T2, after the time T2, beam information of the first channel or the first reference signal is the first beam information or the second beam information, and beam information of the second channel or the second reference signal is the first beam information or the second beam information.

15. The method according to claim 1 or 2, wherein the second beam information is the common beam information or beam information of a specific CORESET; and

in a case that a HARQ-ACK of a first command and a HARQ-ACK of a second command are both sent on a first uplink channel, beam information of the first uplink channel is any one of following:

common beam information previous to common beam information indicated by the first command;

currently used common beam information;

beam information previous to second beam information indicated by the second command;

currently used second beam information;

beam information with a shorter interval between a use time and a transmission time of the first uplink channel, in the common beam information previous to the common beam information indicated by the first command and the beam information previous to the second beam information indicated by the second command;

beam information with a shorter interval between a use time and a transmission time of the first uplink channel, in the currently used common beam information and the currently used second beam information; and

beam information indicated by a network-side device for the first uplink channel.

16. The method according to claim 1 or 2, wherein the second beam information is beam information indicated by DCI in a specific CORESET; and

in a case that a HARQ-ACK of a first command and a target HARQ-ACK are both sent on a first uplink channel, beam information of the first uplink channel is any one of following:

common beam information previous to common beam information indicated by the first command;

currently used common beam information;

beam information of the specific CORESET;

beam information of a search space in which DCI for scheduling the second channel or the second reference signal is located among search spaces associated with the specific CORESET;

beam information indicated when the DCI in the specific CORESET last schedules the second channel or the second reference signal;

beam information indicated when the DCI in the specific CORESET schedules the second channel or the second reference signal;

beam information with a shorter interval between a use time and a transmission time of the first uplink channel, in fifth beam information and sixth beam information, wherein the fifth beam information is either of following: the common beam information previous to the common beam information indicated by the first command and the currently used common beam information, and the sixth beam information is any one of following: the beam information of the specific CORESET, the beam information of the search space in which the DCI for scheduling the second channel or the second reference signal is located among the search spaces associated with the specific CORESET, the beam information indicated when the DCI in the specific CORESET last schedules the second channel or the second reference signal, and the beam information indicated when the DCI in the specific CORESET schedules the second channel or the second reference signal;

beam information indicated by a network-side device for the first uplink channel; and

preset beam information corresponding to a target identifier in a case that a first condition is met, wherein the first condition is that the first uplink channel and the specific CORESET correspond to different transmission and reception point TRP identification information or that the uplink channel and the specific CORESET correspond to different physical cell identifiers PCIs, wherein the target identifier is either of following: a TRP identifier corresponding to the first uplink channel and a PCI corresponding to the first uplink channel, wherein

the target HARQ-ACK is a HARQ-ACK of the DCI or a HARQ-ACK of a channel or a reference signal scheduled by the DCI.

17. The method according to claim 16, wherein the beam information of the first uplink channel and the specific CORESET correspond to same TRP identification information or correspond to different TRP identification information; and the beam information of the first uplink channel and the specific CORESET correspond to a same PCI or different PCIs.

18. The method according to claim 16, wherein in a case that the transmission time of the first uplink channel overlaps a transmission time of a second uplink channel, if HARQ-ACK information on the first uplink channel and information on the second uplink channel are multiplexed on a third uplink channel, beam information of the third uplink channel is any one of following:

the beam information of the third uplink channel;
the beam information of the first uplink channel; and
beam information of the second uplink channel.

19. The method according to claim 1, wherein the target channel comprises at least one of following:

a non-UE-specific PDSCH;
a UE-specific PDSCH;
a non-UE-specific physical downlink control channel PDCCH;
a UE-specific PDCCH;
a physical uplink control channel PUCCH;
a physical uplink shared channel PUSCH;
a PDCCH in a specific CORESET;
a PDSCH associated with the specific CORESET;
a PDSCH scheduled by DCI in the specific CORESET;
a PUCCH associated with the specific CORESET;
a PUCCH in which a HARQ-ACK of a channel scheduled by the DCI in the specific CORESET is located;
a PUSCH associated with the specific CORESET; and
a PUSCH scheduled by the DCI in the specific CORESET.

20. The method according to claim 2 or 19, wherein the specific CORESET is a CORESET whose identifier or index is 0.

21. An apparatus for determining beam information, comprising a determining module and a transmission module, wherein

the determining module is configured to determine target beam information in a case that a first time period overlaps a second time period, wherein the target beam information is beam information in an overlapping time period of the first time period and the second time period, the first time period is a time period before an application time of first beam information, the second time period is a time period before an application time of second beam information, the first beam information is beam information of a first channel or a first reference signal, the second beam information is beam information of a second channel or a second reference signal, and the first beam information is common beam information; and
the transmission module is configured to transmit a target channel or a target reference signal based on the target beam information determined by the determining module, wherein the target channel is the first channel and/or the second channel, and the target reference signal is the first reference signal and/or the second reference signal.

22. The apparatus according to claim 21, wherein the second beam information is any one of following: the common beam information, beam information of a specific control resource set CORESET, and beam information indicated by downlink control information DCI in the specific CORESET.

23. The apparatus according to claim 21 or 22, wherein the first beam information is activated, updated, or indicated by a network-side device through a first command; and
the first time period is any one of following:

a time period between a first time and the application time of the first beam information;

a time period between the first time and a feedback time of acknowledgement ACK information corresponding to the first command;

a time period between the first time and a second time, wherein the second time is a time after first preset duration after the feedback time of the ACK information corresponding to the first command;

a time period between the first time and a feedback time of a hybrid automatic repeat request HARQ of a physical downlink shared channel PDSCH scheduled by the first command; and

a time period between the first time and a time after second preset duration after the feedback time of the HARQ of the PDSCH scheduled by the first command, wherein

the first time is a time when user equipment UE receives the first command or a time when the network-side device sends the first command.

24. The apparatus according to claim 21 or 22, wherein the second beam information is activated, updated, or indicated by a network-side device through a second command; and

the second time period is any one of following:

a time period between a third time and the application time of the second beam information;

a time period between the third time and a feedback time of ACK information corresponding to the second command;

a time period between the third time and a fourth time, wherein the fourth time is a time after third preset duration after the feedback time of the ACK information corresponding to the second command;

a time period between the third time and a feedback time of a HARQ of a PDSCH scheduled by the second command;

a time period between the third time and a time after fourth preset duration after the feedback time of the HARQ of the PDSCH scheduled by the second command; and

a time period between a transmission time of DCI in a specific CORESET and a preset time, wherein the DCI is used to schedule a channel or a reference signal, wherein

the third time is a time when UE receives the second command or a time when the network-side device sends the second command.

25. A communication device, comprising a processor, a memory, and a program or instructions stored in the memory and exectuable on the processor, wherein when the program or instructions are executed by the processor, steps of the method for determining beam information according to any one of claims 1 to 20 are implemented.

26. A readable storage medium, wherein the readable storage medium stores a program or instructions, and when the program or instructions are executed by a processor, steps of the method for determining beam information according to any one of claims 1 to 20 are implemented.

27. A computer program product, wherein the program product is executed by at least one processor to implement steps of the method for determining beam information according to any one of claims 1 to 20.

28. A communication device, wherein the communication device is configured to perform the method for determining beam information according to any one of claims 1 to 20.

FIG. 1

| In a case that a first time period overlaps a second time period, a target device determines target beam information | 201 |
| The target device transmits a target channel or a target reference signal based on the target beam information | 202 |

FIG. 2

FIG. 3

FIG. 4

FIG. 5

**EP 4 383 626 A1**

FIG. 6

## INTERNATIONAL SEARCH REPORT

| International application No. |
| --- |
| **PCT/CN2022/109740** |

**A.    CLASSIFICATION OF SUBJECT MATTER**

H04L 5/00(2006.01)i;  H04B 7/06(2006.01)i;  H04W 16/28(2009.01)i

According to International Patent Classification (IPC) or to both national classification and IPC

**B.    FIELDS SEARCHED**

Minimum documentation searched (classification system followed by classification symbols)

H04L5/-,  H04B7/-,  H04W16/-

Documentation searched other than minimum documentation to the extent that such documents are included in the fields searched

Electronic data base consulted during the international search (name of data base and, where practicable, search terms used)

CNABS; CNTXT; CNKI; BAIDU: 波束, 公共波束, 重叠, 时间段, 第一, 第二, 信道, 参考信号, 控制资源集, 下行控制信息, 激活, 更新, 指示, 反馈, 成员载波, 带宽部分, 传输配置指示; VEN; USTXT; EPTXT; WOTXT; IEEE; 3GPP: beam, common beam, overlap, time, first, second, channel, reference signal, RS, CORESET, DCI, activat+, updat+, indicat+, ACK, CC, component carrier, BWP, TCI

**C.    DOCUMENTS CONSIDERED TO BE RELEVANT**

| Category* | Citation of document, with indication, where appropriate, of the relevant passages | Relevant to claim No. |
| --- | --- | --- |
| A | CN 108781103 A (TELEFONAKTIEBOLAGET LM ERICSSON (PUBL)) 09 November 2018 (2018-11-09)<br>entire document | 1-28 |
| A | CN 110971361 A (HUAWEI TECHNOLOGIES CO., LTD.) 07 April 2020 (2020-04-07)<br>entire document | 1-28 |
| A | CN 112425235 A (QUALCOMM INC.) 26 February 2021 (2021-02-26)<br>entire document | 1-28 |
| A | CN 113170470 A (BEIJING XIAOMI MOBILE SOFTWARE CO., LTD.) 23 July 2021 (2021-07-23)<br>entire document | 1-28 |
| A | CN 111107555 A (ZTE CORP.) 05 May 2020 (2020-05-05)<br>entire document | 1-28 |
| A | WO 2021077372 A1 (TELEFONAKTIEBOLAGET LM ERICSSON PUBL et al.) 29 April 2021 (2021-04-29)<br>entire document | 1-28 |

☑ Further documents are listed in the continuation of Box C.        ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **14 October 2022** | **03 November 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/109740**

| C. DOCUMENTS CONSIDERED TO BE RELEVANT | | |
|---|---|---|
| Category* | Citation of document, with indication, where appropriate, of the relevant passages | Relevant to claim No. |
| A | US 2021185686 A1 (QUALCOMM INC.) 17 June 2021 (2021-06-17)<br>entire document | 1-28 |

Form PCT/ISA/210 (second sheet) (January 2015)

**INTERNATIONAL SEARCH REPORT**
**Information on patent family members**

International application No.

**PCT/CN2022/109740**

| Patent document cited in search report | | | Publication date (day/month/year) | Patent family member(s) | | | Publication date (day/month/year) |
|---|---|---|---|---|---|---|---|
| CN | 108781103 | A | 09 November 2018 | EP | 3433945 | A1 | 30 January 2019 |
| | | | | WO | 2017162283 | A1 | 28 September 2017 |
| | | | | US | 2018062770 | A1 | 01 March 2018 |
| | | | | IN | 201847039161 | A | 26 October 2018 |
| | | | | US | 10277338 | B2 | 30 April 2019 |
| | | | | EP | 3433945 | B1 | 16 October 2019 |
| | | | | CN | 108781103 | B | 01 March 2022 |
| CN | 110971361 | A | 07 April 2020 | WO | 2020063334 | A1 | 02 April 2020 |
| | | | | CN | 110971361 | B | 25 February 2022 |
| CN | 112425235 | A | 26 February 2021 | US | 2020007208 | A1 | 02 January 2020 |
| | | | | WO | 2020006277 | A1 | 02 January 2020 |
| | | | | US | 11057089 | B2 | 06 July 2021 |
| | | | | EP | 3815443 | A1 | 05 May 2021 |
| CN | 113170470 | A | 23 July 2021 | None | | | |
| CN | 111107555 | A | 05 May 2020 | KR | 20220087542 | A | 24 June 2022 |
| | | | | WO | 2021089043 | A1 | 14 May 2021 |
| | | | | CA | 3157086 | A1 | 14 May 2021 |
| | | | | EP | 4057754 | A1 | 14 September 2022 |
| WO | 2021077372 | A1 | 29 April 2021 | None | | | |
| US | 2021185686 | A1 | 17 June 2021 | None | | | |

Form PCT/ISA/210 (patent family annex) (January 2015)

**EP 4 383 626 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110882533